# EUROPEAN PATENT SPECIFICATION

(11) **EP 3 289 664 B1**
(45) Date of publication and mention of the grant of the patent: **21.04.2021**
(21) Application number: 16786874.4
(22) Date of filing: 04.03.2016
(51) Int. Cl.: H02J 7/00, H02J 50/90, H02J 50/80, H04B 5/00, H02J 50/00

(54) **SYSTEM AND METHOD FOR SAFE WIRELESS CHARGING STATION**
SYSTEM UND VERFAHREN FÜR EINE SICHERE DRAHTLOSE LADESTATION
SYSTÈME ET PROCÉDÉ POUR STATION DE CHARGE SANS FIL SANS DANGER

(30) Priority: 28.04.2015 US 201562154058 P; 25.09.2015 US 201514865434
(43) Date of publication of application: 07.03.2018
(73) Proprietor: INTEL Corporation, Santa Clara, CA 95054 (US)
(72) Inventor: PORAT, Shahar, 0308600 Hof Harcarmel (IL); YANG, Songnan, San Jose, CA 95123 (US); KASTURI, Sreenivas, Hillsboro, OR 97124 (US); BEAUCOURT, Paul, Santa Clara, CA 95054 (US)
(74) Representative: HGF
(86) International application number: PCT/US2016/020883
(87) International publication number: WO 2016/175919

(56) References cited:
- EP-A2- 2 713 472
- WO-A1-2014/143104
- US-A1- 2011 127 843
- US-A1- 2011 148 349
- US-A1- 2011 221 388
- US-A1- 2012 248 891
- US-A1- 2014 094 116
- US-A1- 2014 191 568
- US-A1- 2014 333 145
- "A4WP Wireless Power Transfer System Baseline System Specification (BSS)", 3GPP2 DRAFT; PROPOSED A4WP BSS V1.1.2+(2013-1114+RES), 3RD GENERATION PARTNERSHIP PROJECT 2, 3GPP2, 2500 WILSON BOULEVARD, SUITE 300, ARLINGTON, VIRGINIA 22201 ; USA , vol. TSGAC 2 December 2013 (2013-12-02), pages 1-96, XP062275929, Retrieved from the Internet: URL:http://ftp.3gpp2.org/TSGAC/Working/201 3/1202-Kauai/TSG-AC-2013-12-Kauai/WG5/A.S0 025-0/Orig Files/ [retrieved on 2013-12-02]

## Description

### RELATED APPLICATIONS

The present application claims the benefit of U.S. Patent Application No. 14/865,434, filed on September 25, 2015, entitled "SYSTEM AND METHOD FOR SAFE WIRELESS CHARGING STATION" and U.S. Provisional Application No. 62/154,058, filed April 28, 2015, and titled "SYSTEM AND METHOD FOR SAFE WIRELESS CHARGING STATION".

### BACKGROUND

The disclosure relates to safe and improved wireless charging stations. Specifically, the disclosed embodiments provides improved charging stations for detecting devices at or near a wireless charging station that may be damaged by the magnetic field of the wireless charging station.

### DESCRIPTION OF RELATED ART

Wireless charging or inductive charging uses a magnetic field to transfer energy between two devices. Wireless charging can be implemented at a charging station. Energy is sent from one device to another device through an inductive coupling. The inductive coupling is used to charge batteries or run the receiving device. The Alliance for Wireless Power (A4WP) was formed to create industry standard to deliver power through non-radiative, near field, magnetic resonance from the Power Transmitting Unit (PTU) to a Power Receiving Unit (PRU).

The A4WP defines five categories of PRU parameterized by the maximum power delivered out of the PRU resonator. Category 1 is directed to lower power applications (e.g., Bluetooth headsets). Category 2 is directed to devices with power output of about 3.5 W and Category 3 devices have an output of about 6.5 W. Categories 4 and 5 are directed to higher-power applications (e.g., tablets, netbooks and laptops).

PTUs of A4WP use an induction coil to generate a magnetic field from within a charging base station, and a second induction coil in the PRU (i.e., portable device) takes power from the magnetic field and converts the power back into electrical current to charge the battery. In this manner, the two proximal induction coils form an electrical transformer. Greater distances between sender and receiver coils can be achieved when the inductive charging system uses magnetic resonance coupling. Magnetic resonance coupling is the near field wireless transmission of electrical energy between two coils that are tuned to resonate at the same frequency.

Wireless charging is particularly important for fast wireless charging of devices including smartphones, tablets and laptops. There is a need for improved wireless charging systems to extend the active charging area and to improve coupling and charging uniformity while avoiding disruption of nearby devices that may be damaged by the generated magnetic field.

US 2014/333145 A1 discloses a method of differential load detection comprising transmitting a first detection power and a second detection power when an impedance change greater than a first threshold and less than a second threshold is detected and waiting for reception of an advertisement signal in response to the second detection power.

US 2011/221388 A1 discloses a method of detecting and limiting power transfer to non-complaint devices.

WO 2014/143104 A1 discloses a method for exchanging data and charging two devices containing NFC radios using the same frequency for both functions, where the data exchange period and the charging period do not overlap in time.

### BRIEF DESCRIPTION OF THE DRAWINGS

These and other embodiments of the disclosure will be discussed with reference to the following exemplary and non-limiting illustrations, in which like elements are numbered similarly, and where:
Fig. 1 is a schematic overview showing a A4WP charger, device under charge and an NFC card;
Fig. 2 is the top view of an NFC device on A4WP charger network;
Fig. 3 shows two exemplary transfer functions of the network of Fig. 2;
Fig. 4 is an exemplary flow diagram according to one embodiment of the disclosure; Fig. 5 illustrates a measured polling signal with 6.78 MHz carrier and the response from an exemplary NFC device; and
Fig. 6 illustrates an exemplary device according to one embodiment of the disclosure.

### DETAILED DESCRIPTION

Certain embodiments may be used in conjunction with various devices and systems, for example, a mobile phone, a smartphone, a laptop computer, a sensor device, a Bluetooth (BT) device, an UltrabookTM, a notebook computer, a tablet computer, a handheld device, a Personal Digital Assistant (PDA) device, a handheld PDA device, an on board device, an off -board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio- video (AV) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with devices and/or networks operating in accordance with existing Institute of Electrical and Electronics Engineers (IEEE) standards (IEEE 802.11-2012, IEEE Standard for Information technology-Telecommunications and information exchange between systems Local and metropolitan area networks - Specific requirements Part 11: Wireless LAN Medium Access Control (MAC) and Physical Layer (PHY) Specifications, March 29, 2012; IEEE 802.11 task group ac (TGac) ("IEEE 802.1 I-09/0308rI2 - TGac Channel Model Addendum Document"); IEEE 802.11 task group ad (TGad) (IEEE 802.1 lad- 2012, IEEE Standard for Information Technology and brought to market under the WiGig brand - Telecommunications and Information Exchange Between Systems - Local and
Metropolitan Area Networks - Specific Requirements - Part 11: Wireless LAN Medium Access Control (MAC) and Physical Layer (PHY) Specifications - Amendment 3: Enhancements for Very High Throughput in the 60GHz Band, 28 December, 2012)) and/or future versions and/or derivatives thereof, devices and/or networks operating in accordance with existing Wireless Fidelity (Wi-Fi) Alliance (WFA) Peer-to-Peer (P2P) specifications (Wi-Fi P2P technical specification, version 1.2, 2012) and/or future versions and/or derivatives thereof, devices and/or networks operating in accordance with existing cellular specifications and/or protocols, e.g., 3rd Generation Partnership Project (3GPP), 3GPP Long Term Evolution (LTE), and/or future versions and/or derivatives thereof, devices and/or networks operating in accordance with existing Wireless HDTM specifications and/or future versions and/or derivatives thereof, units and/or devices which are part of the above networks, and the like.

Some embodiments may be implemented in conjunction with the BT and/or Bluetooth low energy (BLE) standard. As briefly discussed, BT and BLE are wireless technology standard for exchanging data over short distances using short-wavelength UHF radio waves in the industrial, scientific and medical (ISM) radio bands (i.e., bands from 2400-2483.5 MHz). BT connects fixed and mobile devices by building personal area networks (PANs). Bluetooth uses frequency-hopping spread spectrum. The transmitted data are divided into packets and each packet is transmitted on one of the 79 designated BT channels. Each channel has a bandwidth of 1 MHz. A recently developed BT implementation, Bluetooth 4.0, uses 2 MHz spacing which allows for 40 channels.

Some embodiments may be used in conjunction with one way and/or two-way radio communication systems, a BT device, a BLE device, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like. Some demonstrative embodiments may be used in conjunction with a WLAN. Other embodiments may be used in conjunction with any other suitable wireless communication network, for example, a wireless area network, a "piconet", a WPAN, a WVAN and the like.

Electromagnetic induction based Wireless charging and Near Field Communication (NFC) are two technologies that are based on inductive coupling between two coils. Wireless charging based on A4WP is using 6.78MHz industrial, scientific or medical (ISM) frequency band to deliver power between wireless charger and device, while NFC (and some other RFID technologies) is using 13.56 MHz ISM frequency band to deliver power and data between devices.

Conventional A4WP standard uses lost-power calculation to determine if a rogue or foreign object or device is at or near the magnetic charging field. The conventional methods conduct the lost-power calculation in the following manner. A wireless power charger knows the output power of its PTU coil. A PRU under charge communicates back to the PTU charger as to how much power it has received during a given period. If the received power is smaller than the transmit power, then some of the power has been lost. If the lost power is large enough (e.g., larger than a pre-defined threshold), then the charger will conclude that a rogue object is positioned at or near the charging pad. When a rogue object is detected, the power transfer will cease and the wireless charging system will revert to its latching fault (off) state.

Conventional lost-power algorithms are not be able to detect small NFC devices (or RFID) such as NFC sticker. This is due to the fact that such devices are designed to effectively capture magnetic field. Such devices heat up and are damaged with low amounts of power which is well below the lost-power detection threshold of conventional wireless chargers. Consequently, NFC and RFID devices may be damaged by the A4WP wireless charging magnetic fields.

To overcome these and other shortcomings of the conventional wireless charging systems, certain embodiment of the disclosure provide a wireless charging system capable of detecting presence of sensitive devices (e.g., NFC-compatible devices and RFID). In one embodiment, the disclosed embodiments provide a detection algorithm that detects presence of a device prone to damage by the A4WP wireless charging field at or near a wireless charging station.

In an exemplary implementation, the A4WP wireless charging station uses 6.78MHz frequency as the carrier frequency to carry out NFC interrogation and modulates the charging signal to perform NFC card detection while charging the device under charge (DUC). In another embodiment, the disclosed algorithm may be executed prior to the A4WP charger entering the power transfer state. In still another embodiment, the wireless charger may perform the search algorithm even during the power transfer state. In a further embodiment, when presence of a sensitive device is detected, the charger may end power transfer process, decrease maximum magnetic field and/or inform the user to remove the sensitive device from the wireless charging field.

The disclosed embodiments are particularly advantageous because a wireless charger may readily detect presence or entry of a sensitive device (e.g., NFC or RFID) into the wireless charger's magnetic field. The wireless charger may then decide whether to enter into wireless power transfer or not. The disclosed embodiments are particularly suitable for small devices whose presence may be undetectable to the conventional lost-power calculation techniques.

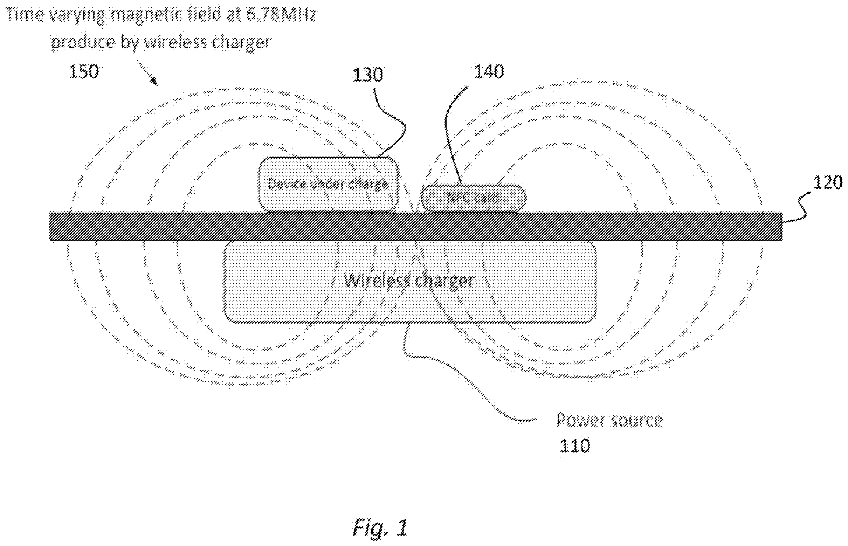

Fig. 1 is a schematic overview showing a A4WP charger, a DUC and an NFC card. Fig. 1 illustrates wireless charger 120 connected to power source 110 and emitting time varying magnetic field 150. The magnetic field is emitted at 6.78MHz which is used by DUC 130 to convert magnetic field 150 into power used to charge the device battery (not shown). NFC card 140 is also located on charger 120. NFC card 140 may be damaged by magnetic field 150 which produces voltage and current in the NFC coil (not shown) due to inductive coupling which is fundamental to NFC technology.

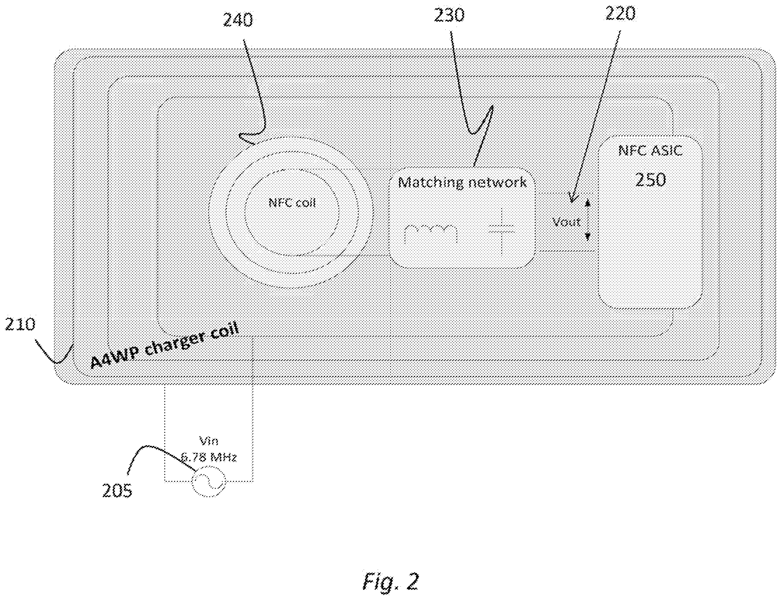

Fig. 2 shows an NFC device on A4WP charger (top view). In Fig. 2, Vᵢₙ - identified as 205 - is the voltage on the A4WP charger coil 210. Vₒᵤₜ - identified as 220 - is the voltage on the NFC Application-Specific Integrated Circuit (ASIC) 250. The combination of A4WP coil 210, A4WP matching network (not shown), NFC coil 240, NFC matching network 230 and the location of NFC coil 240 on the A4WP coil 210 will define the voltage transfer function between Vᵢₙ and Vₒᵤₜ.

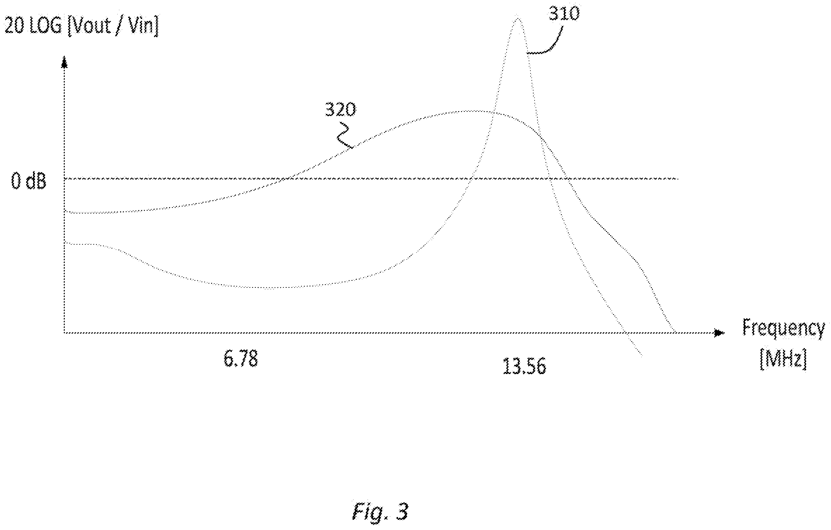

Fig. 3 shows two exemplary transfer functions relating to Fig. 2 network. Curve 310 presents a suitable matching network that filters the 6.78MHz frequency with excellent rejection. Curve 320 illustrates poor frequency rejection at the 6.78MHz frequency. When the NFC device is placed on the A4WP charger and input voltage (Vᵢₙ) is high, then output voltage may be high as well (see red curve 320). Here, the NFC device either dumps the excess voltage/power onto a fixed resistor on the chip (thereby generating significant heat), or the NFC ASIC inside the device may be damaged due to high voltage.

In one embodiment, the disclosure provides an algorithm to detect if an NFC device is located at or near the charging field. Another embodiment uses the A4WP charging hardware and 6.78 MHz frequency signal to detect presence of a sensitive NFC card and/or other devices. The disclosed principles may be implemented without the need to add dedicated NFC transceiver to the wireless charging mat.

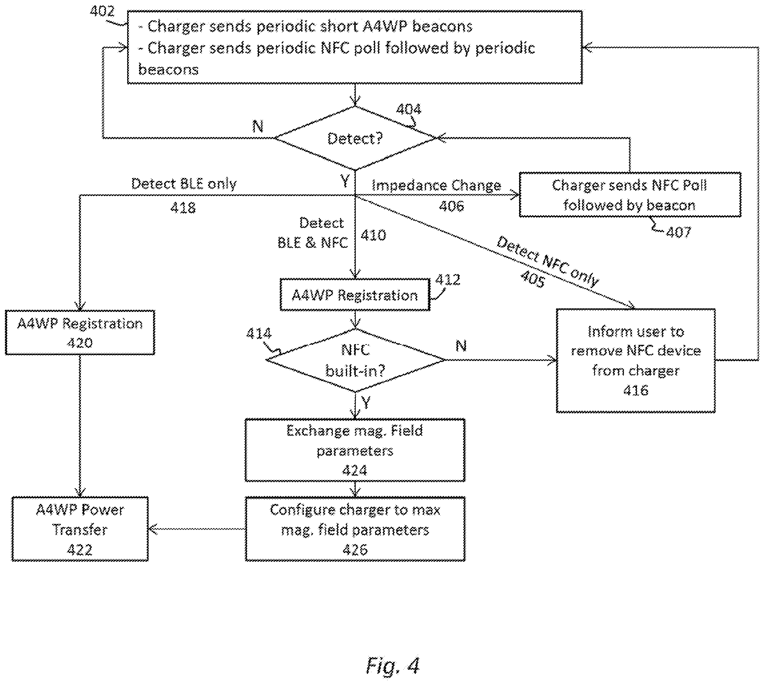

Fig. 4 is an exemplary flow diagram for implementing an embodiment of the disclosure. Specifically, Fig. 4 demonstrates a method to detect presence of an NFC device in the charging field. At step 402, a wireless charger polls the charging environment by sending periodic A4WP short beacons. In one implementation, the charger may send a specific NFC poll followed by a periodic beacon. The beacon may be a sort or a long beacon. In one embodiment of the disclosure, wireless charging may occur immediately upon detecting a mobile device in the charging field. Steps 402 may be implemented simultaneously while the wireless charging is underway.

Referring again to step 402, the wireless charger may send one or more periodic short A4WP beacons followed by one or more periodic NFC polls. The NFC polls may be the so-called NFC-like polls and may be followed by one or more periodic beacons. The beacons may be short or long beacons. As stated, the NFC-like polls can be at a frequency of about 6.78MHz and may be modulated on top of the 6.78MHz A4WP charging signal.

In certain embodiments, the wireless charger may only send one or more periodic short A4WP beacons or one or more periodic NFC polls followed by periodic beacon(s). In still another embodiment, the wireless charger may transmit one or more periodic NFC polls followed by one or more periodic beacons. The order of A4WP and NFC-like (or NFC) signals may be changed to accommodate the desired application without departing from the disclosed principles.

As stated, the NFC poll produced by the charger may be an NFC-like polling signal performed with a 6.78MHz carrier and not a 13.56MHz one as required by NFC specification. The NFC-like poll enables using the A4WP charger's existing hardware and will not require dedicated NFC transceiver or 13.56MHz clock to be embedded into the A4WP charger. In certain embodiments, an NFC polling signal may be generated at 13.56 MHz by using appropriate signaling circuitry.

For the NFC device/tag has high voltage transfer function at about 6.78MHz (for example, curve 320 of Fig. 3), then the device may risk damage. Here, the NFC device receives the NFC-like poll signal produced by the wireless charger and responds with load modulation that can be detected by the wireless charger. Since the frequency is 6.78 MHz (not 13.56 MHz), the NFC device responds in load modulation signals similar to NFC data, but in half frequency. The charger may include built-in capability to detect load modulation signaling at 6.78MHz. By using the 6.78 MHz frequency as the carrier for the NFC tag detection, the disclosed embodiment differentiates a well implemented NFC device having selective input matching from a poorly implemented device prone to damage by the 6.78 MHz charging field. NFC devices that are not prone to heating or damage by the charging field may not be detected by this scheme and thereby not cause false alarm.

At step 404, the wireless charger detects a response signal. In one embodiment of the disclosure, the device on which process of Fig. 4 is implemented includes NFC circuitry. If the detected response signal is only an NFC signal, as shown by arrow 405, then the user is informed to remove the NFC device from the wireless charging environment as step 416. The user may, for example, hear a ringtone or some other indication to remove NFC device from the charger. If the device is not removed, the wireless charger my not engage its magnetic field.

If the detected response signal is an impedance change as shown by arrow 406, the wireless charger may send one or more NFC poll(s) followed by a beacon as shown at step 407. The beacon may be a short or a long beacon. In one embodiment, the power beacon may not contain data and be longer than conventional power beacons. If no response is received from the external device, the process returns to step 404.

If the detected response signal indicates detection of an NFC device and presence of BLE Advertisement as shown by arrow 410, then an A4WP registration step takes place as shown at step 412. The NFC device and the BLE device may be one device or they may comprise two or more devices. At the registration step 412, determination may be made as to whether the device has built-in NFC capability as shown at step 414. If the device does not include a built-in NFC (here, the PTU understands that the NFC device is separate from the phone and not embedded in the phone), then the user is advised to remove the NFC device from the charger at step 416. Similar mechanisms as above may be used to notify the user.

Thereafter, the process reverts back to the intermittent polling step(s) of step 402. If there is a built-in NFC device, then the device may communicate its maximum power and charging requirements to the PTU as shown in step 424. If there a built-in NFC device is not present, then the PTU will determine that another NFC device is locate on the charger and it will revert back to step 402 as provided above.

If the response to the inquiry of step 414 indicates that the DUC does include a built-in NFC, at step 424 various information including maximum magnetic field parameters are exchanged between the DUC and the wireless charger. At step 416, the wireless charger is configured to produce the desired maximum magnetic field and at step 422, the A4WP power transfer between the wireless charger and the DUC commences.

Referring back to the inquiry step 404, if the detected response signal indicates presence of a BLE device only, as shown in arrow 418, the A4WP devices is registered at step 420 and charging of the DUC begins at step 422. Step 420 may be implemented similar to that of step 412. Further, information on a previously registered DUC may be retrieved (for example, as part of step 420) for a known device and its charging requirements. The information may be locally stored or stored at a remote server and retrieved when needed.

In certain embodiments of the disclosure, one or more of the steps shown with reference to Fig. 4 may be implemented in a processor. The processor may represent an actual processor or a virtual processor. The processor may have one or more modules (actual or virtual) to implement each step. In one embodiment, a non-transitory computer-readable storage device may be used to store or execute instructions to direct one or more processors of a wireless charging station to implement one or more steps discussed herein. The storage device may reside on hardware (e.g., solid-state memory), software (e.g., virtual memory) or a combination of hardware and software (e.g., firmware). When executed, the instructions may dynamically configure a magnetic field to accommodate external device. The dynamic configuration may increase the generated magnetic field for optimal charging of the mobile device or cease charging to avoid damage to a proximal external device.

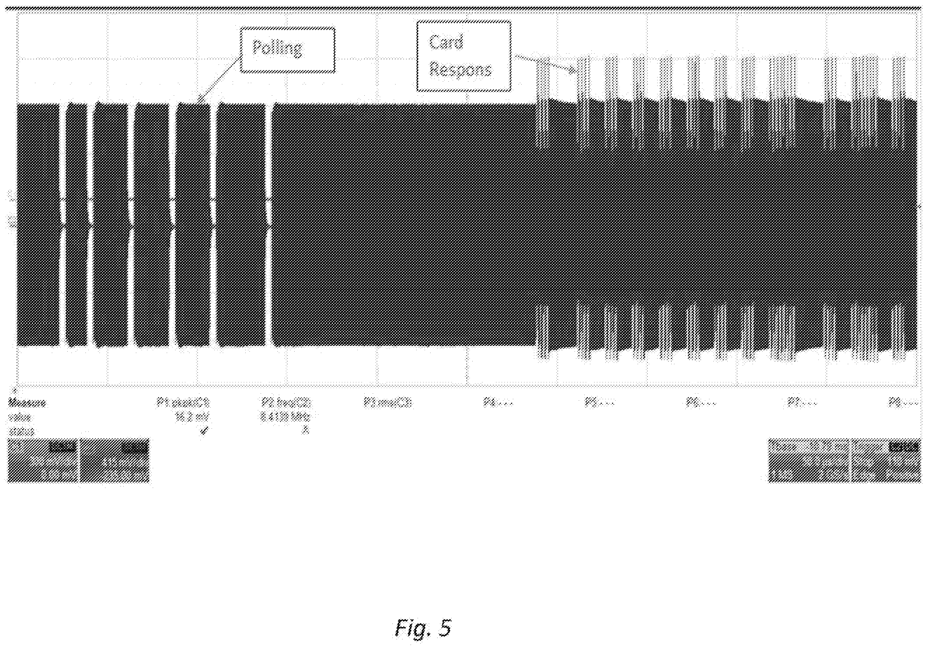

Fig. 5 illustrates a measured polling signal with 6.78 MHz carrier and the response from an exemplary NFC device. Specifically, Fig. 5 shows a picture of the measured signal of NFC-like polling using a carrier at 6.78 MHz instead of 13.56 MHz and its corresponding feedback. The feedback is from load modulation created by an NFC tag. The left side of Fig. 5 shows part of the NFC-like polling sequence. The right side of Fig. 5 shows the load modulation answer from the NFC device (or NFC tag). The left hand side shows the charging signal as a pure sine wave with a carrier signal modulated thereon to produce NFC-like polling at 6.78 MHz frequency.

The data represented in Fig. 5 were carried out with NFC tags based on all major NFC standards (i.e., ISO 14443, ISO 18092 and ISO 15693) and all tags can provide proper response to polling signal modulated onto 6.78 MHz. The response signal may also be decoded by an NFC reader operating at 6.78 Mhz. In one embodiment, the data rate of the signal may be half of NFC, and the bit duration may be twice as compared to NFC (due to working with carrier of 6.78MHz).

In addition to the exemplary flow diagram shown in Fig. 4, during power transfer state, the NFC-like polling sequence may be modulated to the 6.78 MHz charging signal. In one embodiment, the signal may be periodically repeat the polling sequence for all types of NFC tags/device. Given the fast modulation of NFC polling signal, the wireless charging receiver is not likely to experience any impact to the wireless charging user experience and performance. While from detecting NFC tag perspective, continuous polling allows the early detection of potentially problematic NFC devices entering active charging field and getting damaged.

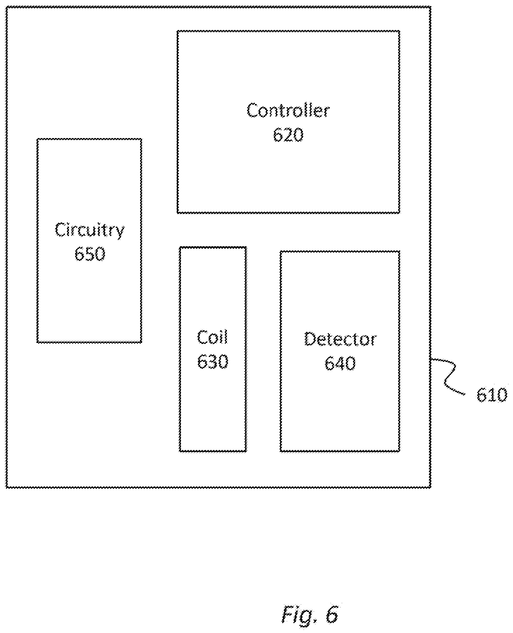

Fig. 6 illustrates an exemplary device or apparatus according to one embodiment of the disclosure. Fig. 6 shows PTU 610 having controller 620, wireless charging coil 630, detector 640 and circuitry 650. While not shown, controller 620, coil 630 and detector 640 may communicate with each other. PTU 610 may define any wireless charging device configured to operation within the A4WP specification and requirements. PTU 610 may define a A4WP charger.

Circuitry 650 may optionally be included to communicate with controller 620 and to produce NFC-like polling modulation according to the disclosed embodiments using the charging signal at 6.78MHz as carrier frequency. In an alternative embodiment, the function of circuitry 650 may be implemented by coil 630. Coil 630 may convert the modulated signals to magnetic field used to charge the PRU. The generated magnetic field (not shown) may also be modulated and it may include the NFC-like polling signals as described above. Other desired frequencies may be provided by controller 620, optionally directly, to coil 630 without departing from the disclosed embodiments.

Detector 640 may define a separate unit or may be optionally combined with coil 630. Detector 640 may comprise integrated circuitry and mechanism required to detect feedback from load modulation by an external device (e.g., an RFID tag, NFC device, BT/BLE device or device under charge). In an optional embodiment, an NFC reader (not shown) may be included in PTU 610. The NFC reader (not shown) may be integrated with detector 640 or may be configured as a separate unit. Other sensors and/or detectors (not shown) may also be included to detect other unique signals without departing from the disclosed principles.

In one embodiment, controller 620 may cause coil 630 (either directly or through circuitry 650) to transmit periodic short A4WP beacons to identify a nearby DUC. In another embodiment, controller 620 may cause coil 630 (either directly or through circuitry 650) to send periodic NFC-like poll(s) followed by periodic long beacon(s). A device which may be an NFC device may receive the NFC-like poll signal from coil 630 and respond with load modulation signaling that can be detected by detector 640. Detector 640 may comprise circuitry to detect load modulation signaling at the transmitted NFC-like signal (e.g., 6.78 MHz). Detector 640 may use the 6.78 MHz as the carrier to differentiate between a damage prone device from an otherwise magnetically chargeable device.

Upon detecting presence of a sensitive device at or near PTU 610, detector 640 may alert controller 620. Controller 620 may then direct coil 630 to dynamically disengage from generating a magnetic field. In an exemplary embodiment, controller 620 may cause external displays to communicate a message to the user that charging may not be commenced due to presence of a sensitive device. In another embodiment, controller 620 may sound an alarm to alert the user. Controller 620 may also determine the duration and frequency of beacon signaling such that sensitive external devices may be detected without excessive interruption of the wireless charging operation.

Alternatively, Detector 640 may dynamically signal Controller 620 that a sensitive device is not present. Controller 620 may then determine the desired charging configuration for the DUC by exchanging magnetic field parameters with the DUC. Controller 620 may direct coil 630 to generate the maximum magnetic field to charge the DUC. Controller 620 may intermittently cause coil 630 and detector 640 to detect presence of sensitive devices at or near PTU 610.

The following non-limiting examples are provided to further illustrates the disclosed principles. Example 1 is directed to a wireless charging station, comprising: a transmitter to transmit one or more periodic A4WP beacons; a detector to detect a response from an external device in response to the one or more A4WP beacons and to identify the response as one of a Bluetooth Low Energy (BLE) advertisement, a Near Field Communication (NFC) load modulation, an impedance change or a combination thereof; and a controller including processing circuitry to dynamically configure a magnetic field for the identified external device.
Example 2 is directed to the wireless charging station of example 1, wherein the transmitter transmits one or more periodic A4WP beacons and one or more periodic NFC-like polls.
Example 3 is directed to the wireless charging station of any foregoing example , wherein the one or more NFC-like polls have a frequency of about 6.78 MHz.
Example 4 is directed to the wireless charging station of any foregoing example, wherein the NFC load modulated is a modulation of the one or more NFC-like polls by the external device.
Example 5 is directed to the wireless charging station of any foregoing example, further comprising an A4WP charger coil in communication with the controller to generate and adaptively control the magnetic field.
Example 6 is directed to the wireless charging station of any foregoing example, wherein the detector detects a BLE and NFC response and one of instruct removal of the external device or exchange magnetic parameters with the external device.
Example 7 is directed to the wireless charging station of any foregoing example, wherein the detector detects a BLE signal and the controller configures the A4WP charger for power transfer.
Example 8 is directed to an apparatus comprising a detector and a circuitry, the detector configured to detect presence of a proximal electronic device at or near a magnetic field from a modulated signal received from the external device, the modulated signal including one or more of a Bluetooth Low Energy (BLE) advertisement, a Near Field Communication (NFC) load modulation, an impedance change in magnetic field or a combination thereof.
Example 9 is directed to the apparatus of any foregoing example, wherein the circuitry is configured to dynamically initiate, continue or cease the magnetic field when the proximal electronic device is detected.
Example 10 is directed to the apparatus of any foregoing example, wherein the circuitry transmits one or more periodic A4WP beacons and one or more periodic NFC-like polls.
Example 11 is directed to the apparatus of any foregoing example, wherein the one or more NFC-like polls have a frequency of about 6.78 MHz.
Example 12 is directed to the apparatus of any foregoing example, wherein the NFC load modulated is a modulation of the one or more NFC-like polls by the external device.
Example 13 is directed to the apparatus of any foregoing example, further comprising an A4WP charger coil in communication with the controller to generate and adaptively control the magnetic field.
Example 14 is directed to the apparatus of any foregoing example, wherein the detector detects a BLE signal and directs the A4WP charger coil for power transfer to the proximal electronic device.
Example 15 is directed to a method to detect presence of an external device proximal to a wireless charging station, the method comprising: transmitting one or more periodic A4WP beacons; detecting a response to the one or more periodic A4WP beacons from an external device and identifying the response as one of a Bluetooth Low Energy (BLE) advertisement, a Near Field Communication (NFC) load modulation, an impedance change or a combination thereof; and dynamically configuring a magnetic field to accommodate external device.
Example 16 is directed to the method of any foregoing example, further comprising, transmitting one or more periodic A4WP beacons and one or more periodic NFC-like polls.
Example 17 is directed to the method of any foregoing example, wherein the one or more NFC-like polls have a frequency of about 6.78 MHz and are followed by a long beacon.
Example 18 is directed to the method of any foregoing example, wherein the NFC load modulated is a modulation of the one or more NFC-like polls by the external device.
Example 19 is directed to the method of any foregoing example, generating the magnetic field by engaging an A4WP charger coil.
Example 20 is directed to the method of any foregoing example, further comprising detecting a BLE and NFC response from the external device and exchanging magnetic parameters with the external device.
Example 21 is directed to the method of any foregoing example, wherein the detector detects a BLE signal and the controller configures the A4WP charger for power transfer.
Example 22 is directed to a non-transitory computer-readable storage device comprising a set of instructions to direct one or more processors associated with a wireless charging station to: transmit one or more periodic A4WP beacons; detect a response to the one or more periodic A4WP beacons from an external device and identify the response as one of a Bluetooth Low Energy (BLE) advertisement, a Near Field Communication (NFC) load modulation, an impedance change or a combination thereof; and dynamically configure a magnetic field to accommodate external device.
Example 23 is directed to the non-transitory computer-readable storage device of any foregoing example, wherein the transmitter transmits one or more periodic A4WP beacons and one or more periodic NFC-like polls.
Example 24 is directed to the non-transitory computer-readable storage device of any foregoing example, wherein the one or more NFC-like polls have a frequency of about 6.78 MHz.
Example 25 is directed to the non-transitory computer-readable storage device of any foregoing example, wherein the NFC load modulated is a modulation of the one or more NFC-like polls by the external device.
Example 26 is directed to a method to detect presence of an Near Field Communication (NFC)/RFID device proximal to a wireless charging station, the method comprising: transmitting NFC-like polls having a carrier frequency of about 6.78MHz; detecting a response to the NFC-like polls, the response comprising by an NFC load modulation, and dynamically configuring a magnetic field generated by the charging station to accommodate the NFC/RFID device.
Example 27 is directed to the method of any foregoing example, further comprising transmitting NFC-like polls at the carrier frequency of about 6.78 MHz while charging the NFC/RFID device with the 6.78 MHz signal.

Various embodiments of the invention may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

While the principles of the disclosure have been illustrated in relation to the exemplary embodiments shown herein, the principles of the disclosure are not limited thereto and include any modification, variation or permutation thereof.

## Claims

1. A wireless charging station (610), comprising:
a transmitter (630) configured to transmit one or more periodic Alliance for Wireless Power, A4WP, beacons and one or more periodic Near Field Communication, NFC, polls;
a detector (640) configured to detect a response from an external device in response to the one or more A4WP beacons and the one or more periodic NFC polls and configured to identify the response as comprising a Bluetooth Low Energy, BLE, advertisement and a NFC load modulation, wherein in response to the detection, the detector is configured to perform an A4WP registration, wherein the A4WP registration comprises the detector being configured to determine whether the external device includes a built-in NFC capability and in response to determining that the external device does include a built-in NFC capability, the detector is configured to exchange maximum magnetic field parameters with the external device; and
a controller (620) including processing circuitry adapted to dynamically configure a magnetic field corresponding to the maximum field parameters for charging the identified external device.

2. The wireless charging station of claim 1, wherein the one or more NFC polls have a frequency of about 6.78 MHz.

3. The wireless charging station of claim 2, wherein the NFC load modulated is a modulation of the one or more NFC polls by the external device.

4. The wireless charging station of claim 1, further comprising an A4WP charger coil in communication with the controller to generate and adaptively control the magnetic field.

5. A method to detect presence of an external device proximal to a wireless charging station, the method comprising:
transmitting (402) one or more periodic Alliance for Wireless Power, A4WP, beacons and one or more periodic Near Field Communications, NFC, polls;
detecting (404) a response to the one or more periodic A4WP beacons and the one or more periodic NFC polls from an external device and identifying (410) the response as comprising a Bluetooth Low Energy, BLE, advertisement and a Near Field Communication, NFC, load modulation;
responsive to the detection, performing (412) A4WP registration, wherein the A4WP registration comprises determining (414) whether the external device includes a built-in NFC capability; and
responsive to determining that the external device does include a built-in NFC capability exchanging (424) maximum magnetic field parameters with the external device; and
dynamically configuring (426) a magnetic field corresponding to the maximum magnetic field parameters for charging the identified external device.

6. The method of claim 5, wherein the one or more NFC polls have a frequency of about 6.78 MHz and are followed by a long beacon.

7. The method of claim 6, wherein the NFC load modulated is a modulation of the one or more NFC polls by the external device.

8. The method of claim 5, further comprising generating the magnetic field by engaging an A4WP charger coil.

9. A non-transitory computer-readable storage device comprising a set of instructions to direct one or more processors associated with a wireless charging station to implement the steps or processes of any of claims 5-8.

## Patentansprüche

1. Drahtlose Ladestation (610), die Folgendes umfasst:
einen Sender (630), ausgelegt zum Senden einer oder mehrerer periodischer Baken gemäß der Allianz für drahtlose Stromversorgung bzw. periodischer A4WP-Baken und einer oder mehrerer periodischer Nahfeldkommunikations-Abfragen bzw. periodischer NFC-Abfragen;
einen Detektor (640), ausgelegt zum Detektieren einer Antwort von einer externen Vorrichtung als Reaktion auf die eine oder die mehreren A4WP-Baken und die eine oder die mehreren periodischen NFC-Abfragen und ausgelegt zum Identifizieren, dass die Antwort eine Niederenergie-Bluetooth-Ankündigung bzw. BLE-Ankündigung und eine NFC-Lastmodulation umfasst, wobei der Detektor ausgelegt ist, als Reaktion auf die Detektion, eine A4WP-Registrierung vorzunehmen, wobei die A4WP-Registrierung umfasst, dass der Detektor ausgelegt ist zum Bestimmen, ob die externe Vorrichtung eine eingebaute NFC-Fähigkeit aufweist, und als Reaktion auf das Bestimmen, dass die externe Vorrichtung eine eingebaute NFC-Fähigkeit aufweist, der Detektor ausgelegt ist zum Austauschen von maximalen Magnetfeldparametern mit der externen Vorrichtung; und
einen Controller (620), der eine Verarbeitungsschaltungsanordnung aufweist, die eingerichtet ist zum dynamischen Konfigurieren eines Magnetfelds, das den maximalen Magnetfeldparametern zum Laden der identifizierten externen Vorrichtung entspricht.

2. Drahtlose Ladestation nach Anspruch 1, wobei die eine oder die mehreren NFC-Abfragen eine Frequenz von etwa 6,78 MHz aufweisen.

3. Drahtlose Ladestation nach Anspruch 2, wobei die NFC-Lastmodulation eine Modulation der einen oder der mehreren NFC-Abfragen durch die externe Vorrichtung ist.

4. Drahtlose Ladestation nach Anspruch 1, ferner umfassend eine A4WP-Ladegerätespule, die sich in Kommunikation mit dem Controller befindet, um das Magnetfeld zu erzeugen und adaptiv zu steuern.

5. Verfahren zum Detektieren des Vorhandenseins einer externen Vorrichtung, die sich nahe einer drahtlosen Ladestation befindet, wobei das Verfahren Folgendes umfasst:
Senden (402) einer oder mehrerer periodischer Baken gemäß der Allianz für drahtlose Stromversorgung bzw. periodischer A4WP-Baken und einer oder mehrerer periodischer Nahfeldkommunikations-Abfragen bzw. periodischer NFC-Abfragen;
Detektieren (404) einer Antwort von einer externen Vorrichtung als Reaktion auf die eine oder die mehreren A4WP-Baken und die eine oder die mehreren periodischen NFC-Abfragen und Identifizieren (410), dass die Antwort eine Niederenergie-Bluetooth-Ankündigung bzw. BLE-Ankündigung und eine Nahfeldkommunikations-Lastmodulation bzw. NFC-Lastmodulation umfasst;
als Reaktion auf die Detektion, Vornehmen (412) einer A4WP-Registrierung, wobei die A4WP-Registrierung Bestimmen (414) umfasst, ob die externe Vorrichtung eine eingebaute NFC-Fähigkeit aufweist; und
als Reaktion auf Bestimmen, dass die externe Vorrichtung eine eingebaute NFC-Fähigkeit aufweist, Austauschen (424) von maximalen Magnetfeldparametern mit der externen Vorrichtung; und
dynamisches Konfigurieren (426) eines Magnetfelds, das den maximalen Magnetfeldparametern zum Laden der identifizierten externen Vorrichtung entspricht.

6. Verfahren nach Anspruch 5, wobei die eine oder die mehreren NFC-Abfragen eine Frequenz von etwa 6,78 MHz aufweisen und von einer langen Bake gefolgt werden.

7. Verfahren nach Anspruch 6, wobei die NFC-Lastmodulation eine Modulation der einen oder der mehreren NFC-Abfragen durch die externe Vorrichtung ist.

8. Verfahren nach Anspruch 5, ferner umfassend das Erzeugen des Magnetfelds durch Anschließen an eine A4WP-Ladegerätespule.

9. Nichttransitorische computerlesbare Speicherungsvorrichtung, umfassend eine Menge von Anweisungen, um einen oder mehrere mit einer drahtlosen Ladestation assoziierte Prozessoren anzuleiten, die Schritte oder Prozesse nach einem der Ansprüche 5-8 zu implementieren.

## Revendications

1. Station de charge sans fil (610), comprenant :
un émetteur (630) configuré pour émettre une ou plusieurs balises de type Alliance for Wireless Power, A4WP, périodiques et une ou plusieurs interrogations de type communication en champ proche, NFC, périodiques ;
un détecteur (640) configuré pour détecter une réponse en provenance d'un dispositif externe en réponse aux une ou plusieurs balises A4WP et aux une ou plusieurs interrogations NFC périodiques et configuré pour identifier la réponse comme comprenant une annonce de type Bluetooth basse consommation, BLE, et une modulation de charge NFC, le détecteur, en réponse à la détection, étant configuré pour réaliser un enregistrement A4WP, l'enregistrement A4WP comprenant le fait que le détecteur est configuré pour déterminer si le dispositif externe comporte ou non une fonctionnalité NFC intégrée et, en réponse à la détermination que le dispositif externe ne comporte pas une fonctionnalité NFC intégrée, le détecteur étant configuré pour échanger des paramètres de champ magnétique maximal avec le dispositif externe ; et
un contrôleur (620) comportant une circuiterie de traitement adaptée à configurer dynamiquement un champ magnétique correspondant aux paramètres de champ magnétique maximal pour la charge du dispositif externe identifié.

2. Station de charge sans fil selon la revendication 1, dans laquelle les une ou plusieurs interrogations NFC possèdent une fréquence d'environ 6,78 MHz.

3. Station de charge sans fil selon la revendication 2, dans laquelle la modulation de charge NFC consiste en une modulation des une ou plusieurs interrogations NFC par le dispositif externe.

4. Station de charge sans fil selon la revendication 1, comprenant en outre une bobine de chargeur A4WP en communication avec le contrôleur pour générer et commander de manière adaptative le champ magnétique.

5. Procédé de détection de la présence d'un dispositif externe à proximité d'une station de charge sans fil, le procédé comprenant :
l'émission (402) d'une ou de plusieurs balises de type Alliance for Wireless Power, A4WP, périodiques et d'une ou de plusieurs interrogations de type communications en champ proche, NFC, périodiques ;
la détection (404) d'une réponse en provenance d'un dispositif externe en réponse aux une ou plusieurs balises A4WP périodiques et aux une ou plusieurs interrogations NFC périodiques et l'identification (410) de la réponse comme comprenant une annonce de type Bluetooth basse consommation, BLE, et une modulation de charge de type communication en champ proche, NFC ;
en réponse à la détection, la réalisation (412) d'un enregistrement A4WP, l'enregistrement A4WP comprenant la détermination (414) si le dispositif externe comporte ou non une fonctionnalité NFC intégrée ; et
en réponse à la détermination que le dispositif externe ne comporte pas une fonctionnalité NFC intégrée, l'échange (424) de paramètres de champ magnétique maximal avec le dispositif externe ; et
la configuration dynamique (426) d'un champ magnétique correspondant aux paramètres de champ magnétique maximal pour la charge du dispositif externe identifié.

6. Procédé selon la revendication 5, dans lequel les une ou plusieurs interrogations NFC possèdent une fréquence d'environ 6,78 MHz et sont suivies d'une balise longue.

7. Procédé selon la revendication 6, dans lequel la modulation de charge NFC consiste en une modulation des une ou plusieurs interrogations NFC par le dispositif externe.

8. Procédé selon la revendication 5, comprenant en outre la génération du champ magnétique par excitation d'une bobine de chargeur A4WP.

9. Dispositif de stockage non transitoire lisible par ordinateur comprenant un jeu d'instructions pour amener un ou plusieurs processeurs associés à une station de charge sans fil à mettre en œuvre les étapes ou processus selon l'une quelconque des revendications 5 à 8.
